# EUROPEAN PATENT APPLICATION

(11) **EP 2 053 272 A1**
(43) Date of publication of application: **29.04.2009**
(21) Application number: 07119297.5
(22) Date of filing: 25.10.2007
(51) Int. Cl.: F16H 3/00, F16H 3/093

(54) **Dual clutch countershaft longitudinal transmission**

(71) Applicant: IVECO S.p.A., 10156 Torino (IT)
(72) Inventor: Rombola', Vincenzo, 10151 TORINO (IT); Galliano, Luca, 10136 TORINO (IT)
(74) Representative: Borsano, Corrado

(57) **Abstract**

The present invention relates to a dual clutch countershaft longitudinal transmission that includes at least a first and a second main shaft coaxial with each other. At the extremity on the engine side of said first and second main shaft is connected a clutch, an output shaft, and a first and a second coaxial transmission shaft coaxial with each other as well. The transmission according to this invention is characterized in that it comprises two pairs of constant mesh gears placed at the input of the transmission, as to maintain the traditional architecture of the countershaft longitudinal transmission with constant mesh at the input of the transmission.

Furthermore the transmission scheme according to this invention is suitable to transmission with different number of gear ratios, for example to five, six, seven-speed transmissions, and allows to obtain a dual clutch countershaft longitudinal transmission, making minimal changes to the manual countershaft longitudinal transmission schemes with the same number of constant mesh gears at the input and without changing the torque flow logic of the transmission.

The dual clutch countershaft longitudinal transmission according to this invention allows to use the dual clutch for all the gears, with a gear operating in direct drive and with the possibility to have the highest gear operating in over drive.

## Description

This invention relates to a dual clutch countershaft longitudinal transmission, with a scheme that allows to obtain a dual clutch transmission according to the architecture of a manual countershaft longitudinal transmission with constant mesh gear at the input.

In particular, this invention relates to a longitudinal countershaft transmission that may have a different number of gears, without changing the scheme of the corresponding conventional manual transmission with the same number of gears.

In the automotive sector, sequential transmissions with a dual clutch scheme are known in the prior art. This scheme is used to optimize the shifting speed through the decoupling between odd and even gears, that results in the possibility of shifting up and down without interrupting the power flow from the engine.

In particular, the dual clutch transmissions realize this decoupling dedicating a part of the transmission to the odd gears, and the other to the even gears.

The two clutches are generally ring-shaped and are coaxial for compactness reasons. On one side they are coupled to the engine, and on the other to two distinct input shafts of the transmission, that are coaxial as well.

The aim of the two clutches is to allow the transmission of the power flow from the engine and the shifting of the gear ratios at the same time. While one of the clutches is engaged with a gear selected, for example the third gear, the other stays open with a higher or lower gear ratio, the second or the fourth, which is already selected. When shifting, the clutch with the current gear ratio opens and, at the same time, the clutch with the following gear ratio closes, therefore it is not necessary to release the throttle.

The dual clutch transmission allows an extremely rapid shifting, making the driving style more sporting and at the same time increasing the comfort, because it eliminates the interruption of power flow typical of a traditional transmission. Also, it may result in a reduction of fuel consumptions, because it makes possible to avoid the vehicle decelerations due to the power interruption.

All these advantages of the dual clutch transmission compared to the manual mechanical transmission involve, however, the use of a more sophisticated technology and therefore make the dual clutch transmission more expensive than the manual mechanical one.

Moreover, if in the case of sporting cars a higher shifting speed performance may justify a higher cost for the users, in the case of industrial vehicles or of vehicles intended to transport goods and/or passengers, the aspect that the transmission unit should privilege is the comfort and the cost, that should not be much higher than that of a traditional mechanical transmission.

The architecture of the dual clutch countershaft longitudinal transmissions of the type known features a number of drawbacks.

The first drawback is the position of the constant mesh gear placed at the output of the transmission, rather that at the input according to the traditional architecture of the countershaft longitudinal transmissions. The position of the constant mesh gear at the output of the transmission makes necessary to enlarge the transmission shaft and the gear itself, in order to withstand possible problems due to fatigue or to overloading.

The second drawback of the countershaft longitudinal transmissions of the type known is in the fact that not all the gears may be engaged using the two clutches.

An additional drawback of the countershaft longitudinal transmissions of the type known is in the fact that they cannot have an overdrive trasmission operating on their highest gear. In other words, the dual clutch transmission often have, where available, the highest gear ratio operating in direct drive rather than in over drive.

Also, not least drawback of some dual clutch transmissions of the type known is the fact that they cannot have a direct drive gear, whereas it is possible in the countershaft longitudinal transmissions.

The primary task of this invention is to provide a device scheme of a dual clutch countershaft longitudinal transmission that overcomes the drawbacks of the known type solutions.

In the scope of this task, the purpose of this invention is to provide a dual clutch countershaft longitudinal transmission requiring minimal changes of the scheme of the traditional countershaft longitudinal transmissions, in particular keeping the constant mesh gear at the input of the transmission and ensuring a direct drive gear.

A further purpose of this invention is to provide a dual clutch countershaft longitudinal transmission that allows using the dual clutch for all the gears, with the possibility to have the highest gear operating in over drive.

This task and these and other purposes that are explained below are achieved by a dual clutch countershaft longitudinal transmission including at least a first and a second coaxial main shaft. At the extremity on the engine side of each of said first and second main shaft is connected a clutch, an output shaft, and a first and a second coaxial transmission shaft. The transmission shaft is characterized by the fact that it comprises two pairs of constant mesh gears placed at the input of the transmission, as to maintain the torque flow logic that is typical of the manual countershaft longitudinal transmission, as described more fully in the claims, which are an integral part of this description.

Further characteristics and advantages of this invention will become clear from the following detailed description, that is merely illustrative and not limitative and is shown in the figures that are attached hereto, in which:
figure 1 shows the diagram of a manual five-speed countershaft longitudinal transmission of the type known;
figure 2 shows the diagram of a dual clutch five-speed countershaft longitudinal transmission according to this invention;
figures from 3 to 7 show the diagram of the gear selection of a five-speed countershaft longitudinal transmission according to this invention;

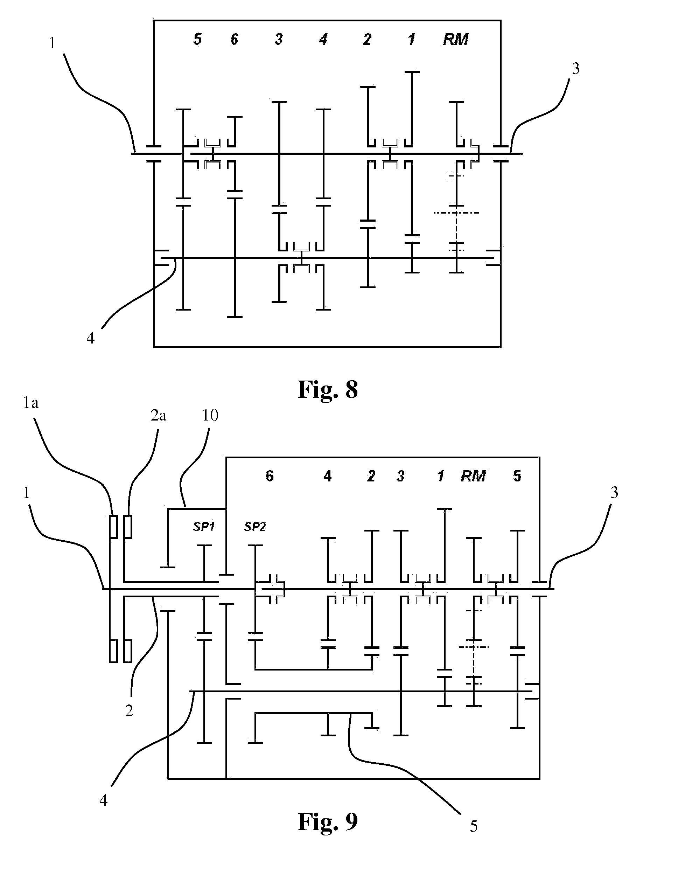

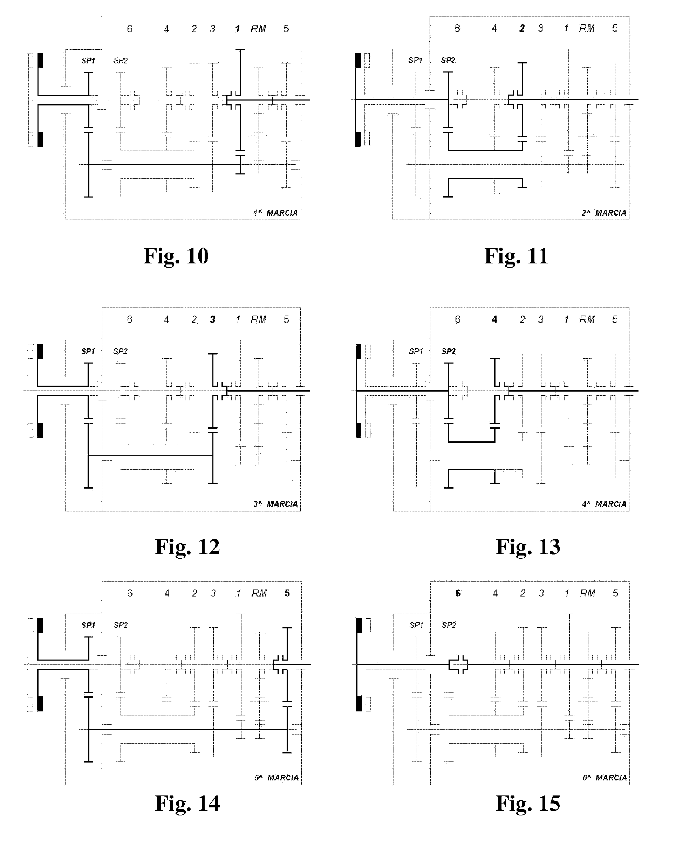

figure 8 shows the diagram of a six-speed manual countershaft longitudinal transmission of the type known;
figure 9 shows the diagram of a dual clutch six-speed countershaft longitudinal transmission according to this invention;
figures from 10 to 15 show the diagram of the gear selection of a six-speed countershaft longitudinal transmission according to this invention;
figures from 16 to 22 show the diagram of the gear selection of a seven-speed countershaft longitudinal transmission according to this invention.

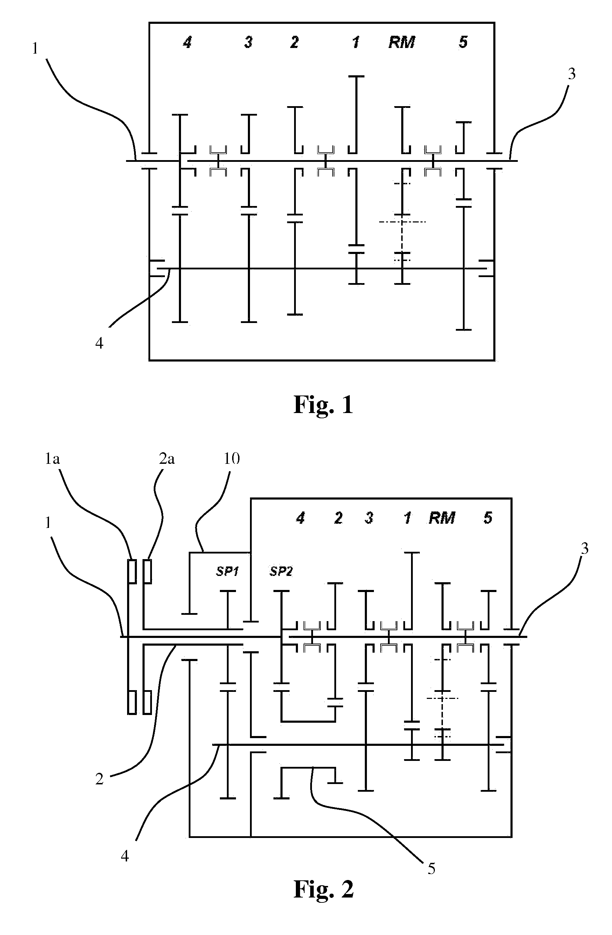

According to a preferred embodiment of the invention, illustrated in the mentioned figures, with particular reference to figure 2, the transmission scheme includes a first main shaft 1 and a second main shaft 2 coaxial with the first. A clutch device is connected to the extremity at the engine side of each main shaft, in particular at the first main shaft 1 is connected a clutch 1a, and at the second main shaft 2 is connected a clutch 2a. Again with reference to the figure 2, the transmission scheme according to this invention features an output shaft 3, a solid first transmission shaft 4 and a hollow second transmission shaft 5 coaxial with the first.

Also, with reference to figure 2, the transmission scheme according to this invention includes two pairs of constant mesh gears SP1 and SP2 placed at the input of the transmission, and each of said pair of gears is integrally connected to one of the said first and second main shaft.

In particular, the pair of gears SP1 connects the second main shaft 2 to the first transmission shaft 4, while the pair SP2 connects the first main shaft 1 to the second transmission shaft 5. As said, these gears constantly mesh.

According to a preferred embodiment of the invention, one of said pair of constant mesh gears is contained in the gearbox, while the other is contained in an additional module 10 to be connected to a half box at the input side of the manual transmission of the type known, leaving unchanged the longitudinal space occupied by the transmission supports compared to a manual transmission with the same number of speeds.

As seen in the figures that show the diagram of the gear selection, the dual clutch countershaft longitudinal transmission according to this invention allows the decoupling of the even gears and of the odd gears on the two main shafts, that is the first and the second main shaft. In particular, the proposed scheme shows that the second main shaft 2 operates the first, the third and the fifth gear, while the first main shaft 1 operates the second, the fourth and the reverse gear.

According to this invention, the transmission scheme functions as follows.

The first transmission shaft 4 is always connected to the second main shaft 2 by means of the constant mesh gear SP1.

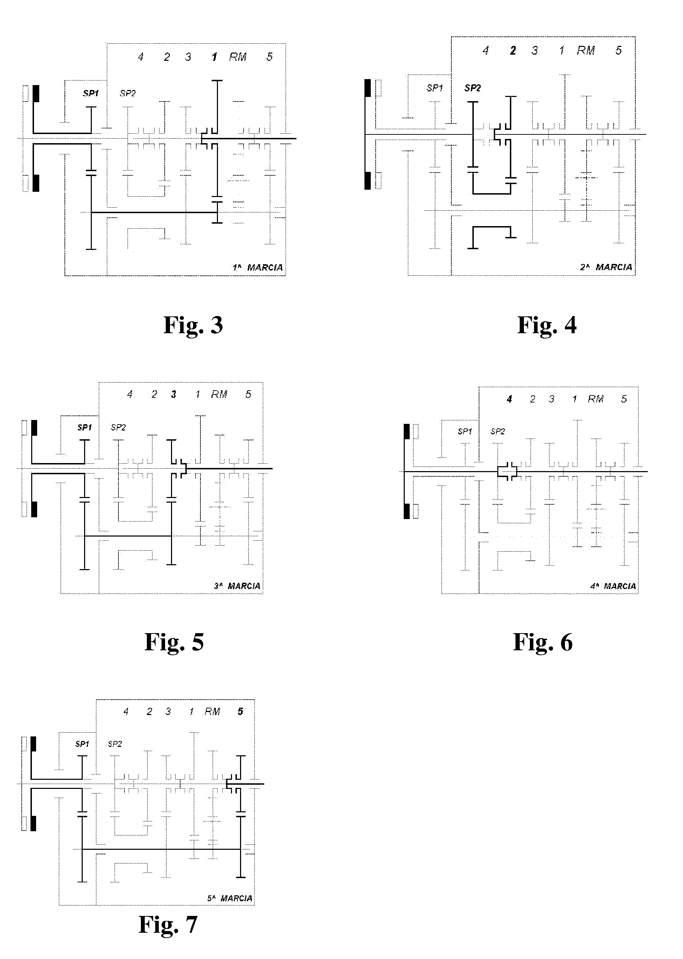

When the clutch 1 a of the first main shaft 1 is closed, and therefore the clutch 2a is opened, the first gear, as in figure 3, the third gear, as in figure 5, or the fifth gear, as in figure 7, can be selected. The selection of the different gears depends on the position and on the action of the synchronizers. When the clutch 1 a of the first main shaft 1 is opened, the even gears can be selected.

For example in figure 3, where the first gear is engaged, the second clutch 2a is closed, while the clutch 1 a is opened. In this way, the second main shaft 2 transmits the motion to the first transmission shaft 4 by means of the constant mesh gear SP1, and then from the transmission shaft the torque is transmitted to the output shaft by means of the pair of toothed wheels that corresponds to the first gear. Note, however, that on the first main shaft 1 the clutch 1 a is opened, so no torque is transmitted from the shaft 1 to the transmission shaft 5 by means of the constant mesh gear SP2, therefore the second gear can be selected. In order to shift from the first to the second gear it is sufficient to open the clutch 2a and close the clutch 1a, an operation that takes very few time and does not need to lift the foot from the throttle.

The transmission according to this invention is therefore a sequential countershaft longitudinal transmission, that is a transmission in which the use of the clutches allows shifting into the immediately higher or immediately lower gear. This results in a shifting without making mistakes, that is to say without the possibility of shifting into a gear that is not immediately higher or lower (for example it is not possible to shift from the first gear to the third gear), and in very short shifting times.

With the transmission scheme according to this invention, therefore it is possible to shift rapidly using the clutches 1a and 2a. The pair of constant mesh gears SP1 and SP2 allows to have a gear selected on a main shaft and the following on the other main shaft. In this way, the following gear has already been selected and shifting occurs by only disengaging a clutch and engaging the other.

The operation is, of course, the same both in up shifting and in down shifting.

Comparing figure 1 showing a manual transmission of the type known and figure 2 showing the transmission scheme according to this invention, it is possible to see that the transmission scheme according to this invention allows to keep the synchronizers in the same position as in the transmission scheme of the type known, and therefore to obtain a dual clutch countershaft longitudinal transmission requiring minimal changes to the architecture, compared to the corresponding traditional manual transmission.

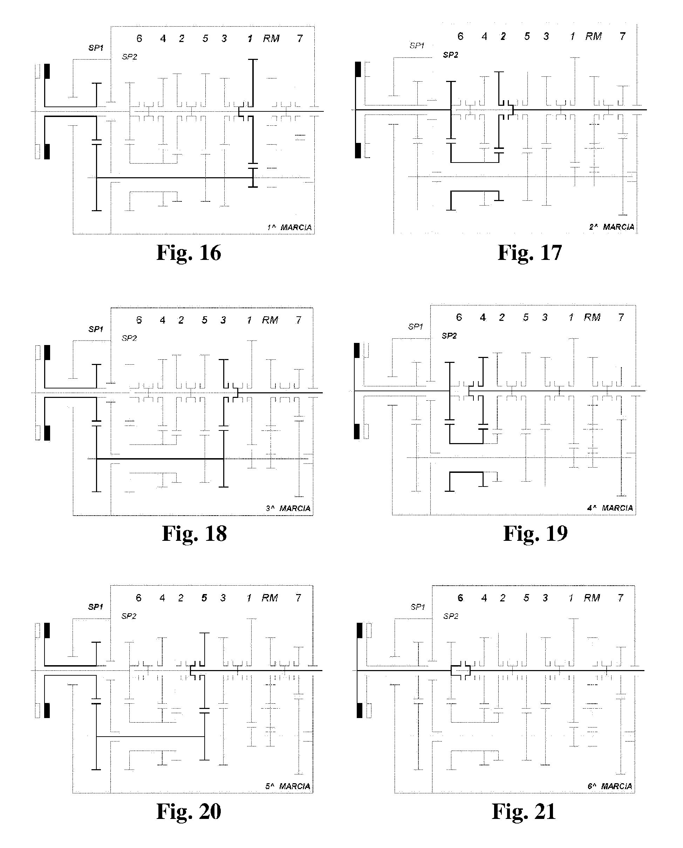

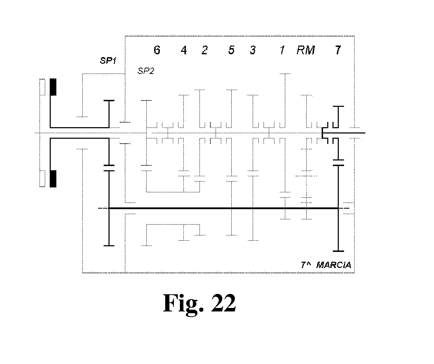

With particular reference to figures 6 and 21, the transmission scheme according to this invention allows to have a direct drive on the second last gear, making possible to have an over drive transmission, that is with the second last gear in direct drive and the last gear in over drive. In this case, over drive means that the rotational speed of the output shaft is higher that the rotational speed of the input shaft of the transmission.

It has been shown that the transmission scheme according to the present invention achieves the purpose and the objects proposed.

In particular, it has been shown that the transmission scheme allows to obtain a dual clutch countershaft longitudinal transmission, without changing the architecture of the traditional manual transmission with a constant mesh gear at the input of the transmission. This allows to replace a manual transmission with a sequential transmission, making few changes to the whole embodiment of the transmission.

A further advantage of the transmission scheme according to this invention, is the fact that it allows to obtain a transmission that, in case of a five or seven speed transmission, has the direct drive on the second last gear and therefore the over drive on the last.

Also, a further advantage obtained by the transmission scheme according to this invention is the fact that it maintains the torque flow logic of the transmission. In fact, the presence of the pairs of constant mesh gears SP1 and SP2 at the input of the transmission allows the transmission of the torque both to the solid transmission shaft and to the hollow transmission shaft, regardless of the gear engaged. This advantage results in the possibility to adequately dimension the two coaxial shafts, without recurring to important torque variations that, in dual clutch countershaft longitudinal transmissions of the type known, will make necessary to enlarge the transmission shaft and the constant mesh gear placed at the output of the transmission.

Not least advantage of the dual clutch countershaft longitudinal transmission according to the present invention is the fact that it provides a dual clutch transmission on every gear, that is in which all gears are engaged using the dual clutch.

It will be apparent to the person skilled in the art that various modifications can be conceived and reduced to practice without departing from the scope of the invention.

Therefore, the scope of the claims is not limited to the illustrations or the preferred embodiments shown in the description as an example, but rather the claims include all the patentable novelties deriving from this invention, including all the equivalent embodiments for a person skilled in the art.

## Claims

1. Dual clutch countershaft longitudinal transmission including at least a first (1) and a second (2) main shaft coaxial with each other, at the extremity on the engine side of each of said first and second (2) main shaft being connected a clutch respectively (1 a) and (2a), an output shaft (3), and a first (4) and a second (5) transmission shaft coaxial with each other as well, **characterized in that** it comprises two pairs of constant mesh gears (SP1, SP2) placed at the input of the transmission, as to maintain the architecture of the manual countershaft longitudinal transmission with constant mesh at the input of the transmission.

2. Dual clutch countershaft longitudinal transmission according to the previous claim, **characterized in that** said first main shaft (1) is solid and said second main shaft (2) is hollow and is coaxial with the first main shaft (1).

3. Dual clutch countershaft longitudinal transmission according to the previous claim, **characterized in that** said first transmission shaft (4) is solid and said second transmission shaft (5) is hollow and is coaxial with the first transmission shaft (4).

4. Dual clutch countershaft longitudinal transmission according any of the previous claims, **characterized in that** said two pairs of constant mesh gears include a first pair of constant mesh gears (SP1) which transmits the motion from said second main shaft (2) to said first transmission shaft (4), and a second pair of constant mesh gears (SP2) which transmits the motion from said first main shaft (1) to said second transmission shaft (5).

5. Dual clutch countershaft longitudinal transmission according to any of the previous claims, **characterized in that** said first main shaft (1) operates the even gears and said second main (2) shaft operates the odd gears.

6. Dual clutch countershaft longitudinal transmission according to any of the previous claims, **characterized in that** one of said pairs of constant mesh gears (SP2) is contained in the gearbox.

7. Dual clutch countershaft longitudinal transmission according to any of the previous claims, **characterized in that** one of said pairs of constant mesh gears (SP1) is contained in an additional module (10) to be connected to the half box at the input side of the manual transmission of the type known.

8. Dual clutch countershaft longitudinal transmission according to any of the previous claims, **characterized in that** it has the second last gear in direct drive and the last gear in over drive.

9. Dual clutch countershaft longitudinal transmission according to any of the previous claims, **characterized in that** the dual clutch works on all gears.

10. Vehicle comprising a dual clutch countershaft longitudinal transmission according to any of the previous claims.

## Amended claims

### Amended claims in accordance with Rule 137(2) EPC.

**1.** Dual clutch countershaft longitudinal transmission including at least a first (1) and a second (2) main shaft coaxial with each other, at the extremity on the engine side of each of said first and second (2) main shaft being connected a clutch respectively (1a) and (2a), an output shaft (3), and a first (4) and a second (5) transmission shaft coaxial with each other as well, **characterized in that** it comprises two pairs of constant mesh gears (SP1, SP2) placed at the input of the transmission, as to maintain the architecture of the manual countershaft longitudinal transmission with constant mesh at the input of the transmission, and **in that** said first main shaft (1) operates the even gears and said second main (2) shaft operates the odd gears.

**2.** Dual clutch countershaft longitudinal transmission according to the previous claim, **characterized in that** said first main shaft (1) is solid and said second main shaft (2) is hollow and is coaxial with the first main shaft (1).

**3.** Dual clutch countershaft longitudinal transmission according to the previous claim, **characterized in that** said first transmission shaft (4) is solid and said second transmission shaft (5) is hollow and is coaxial with the first transmission shaft (4).

**4.** Dual clutch countershaft longitudinal transmission according any of the previous claims, **characterized in that** said two pairs of constant mesh gears include a first pair of constant mesh gears (SP1) which transmits the motion from said second main shaft (2) to said first transmission shaft (4), and a second pair of constant mesh gears (SP2) which transmits the motion from said first main shaft (1) to said second transmission shaft (5).

**5.** Dual clutch countershaft longitudinal transmission according to any of the previous claims, **characterized in that** one of said pairs of constant mesh gears (SP2) is contained in the gearbox.

**6.** Dual clutch countershaft longitudinal transmission according to any of the previous claims, **characterized in that** one of said pairs of constant mesh gears (SP1) is contained in an additional module (10) to be connected to the half box at the input side of the manual transmission of the type known.

**7.** Dual clutch countershaft longitudinal transmission according to any of the previous claims, **characterized in that** it has the second last gear in direct drive and the last gear in over drive.

**8.** Dual clutch countershaft longitudinal transmission according to any of the previous claims, **characterized in that** the dual clutch works on all gears.

**9.** Vehicle comprising a dual clutch countershaft longitudinal transmission according to any of the previous claims.
